# EUROPÄISCHE PATENTANMELDUNG

(11) **EP 1 914 927 A1**
(43) Veröffentlichungstag der Anmeldung: **23.04.2008**
(21) Anmeldenummer: 07116342.2
(22) Anmeldetag: 13.09.2007
(51) Int. Cl.: H04L 12/10, H04L 12/66

(54) **Buskoppler sowie Kommunikationssystem mit Buskoppler**

(30) Priorität: 20.10.2006 DE 102006049636
(71) Anmelder: SIEMENS AKTIENGESELLSCHAFT, 80333 München (DE)
(72) Erfinder: Götzmann, Armin, 76476 Bischweier (DE)

(57) **Zusammenfassung**

Ein Buskoppler ist dadurch gekennzeichnet, dass eine erste Schnittstelle (1) vorhanden ist, zur Anschaltung an ein aus ersten Feldgeräten (5a) gebildetes Kommunikationssystem (5), sowie eine zweite Schnittstelle (2) vorhanden ist, zur Anschaltung an ein Energieversorgungsnetz (6), an welches zweite Feldgeräte (7) angeschaltet sind, und die beiden Schnittstellen (1, 2) mittels eines Umsetzers (3) miteinander verbunden sind.

Des Weiteren ist ein Kommunikationssystem, insbesondere Feldbus, mit wenigstens zwei Feldgeräten (5a, 7) dadurch gekennzeichnet, dass die Feldgeräte (5a, 7) über einen vorstehend genannten Buskoppler (8) miteinander verbunden sind.

## Beschreibung

Die Erfindung betrifft einen Buskoppler sowie ein Kommunikationssystem, insbesondere Feldbus, mit wenigstens zwei Feldgeräten.

Insbesondere in der Automatisierungstechnik sind Steuergeräte sowie Sensoren und Stellglieder regelmäßig mittels eines als Bus ausgebildeten Kommunikationssystems miteinander verbunden. So sind bei einem unter dem Namen Feldbus bekannten industriellen Kommunikationssystem eine Vielzahl von Feldgeräten wie Messfühler (Sensoren), Stellglieder und Antriebe (Aktoren) mittels des Feldbusses mit einem Steuergerät verbunden. Bei einem Feldbus werden die Geräte unabhängig von ihrer hierarchischen Ebene mittels eines einzigen Buskabels miteinander verbunden. Insbesondere lassen sich beispielsweise mittels eines Feldbusses bei speicherprogrammierbaren Steuerungen unterschiedlicher Hersteller oder PC-basierten Steuerungen alle Komponenten miteinander vernetzen.

Da mittels des Feldbusses in erster Linie die Steuerung der im Netz vorhandenen Komponenten erfolgen soll, ist die Busleitung nicht zur Übertragung größerer Leistungen geeignet. Dennoch lassen sich Stellglieder mit geringer Leistungsaufnahme mittels des Feldbusses mit Energie versorgen. Zur Versorgung von Geräten mit größerer Leistungsaufnahme müssen diese jedoch mit einer entsprechenden Anschlussleitung mit einem Energieversorgungsnetz verbunden werden. Bei derartigen Feldgeräten ist daher neben der Feldbusleitung eine separate Energieleitung erforderlich.

Es ist bekannt, über Energieleitungen Steuerdaten zu übertragen. So werden beispielsweise bei dem so genannten European Installation Bus (EIB), welcher regelmäßig in der Gebäudetechnik verwendet wird, Steuerdaten über die Energieleitung zu Stellgliedern wie beispielsweise Rollladenmotoren übertragen. Die entsprechend ausgebildeten Feldgeräte bilden jedoch ein eigenes Netz und können nicht mit Feldgeräten verbunden werden, bei welchen die Steuerdaten mittels einer separaten Feldbusleitung übertragen werden.

Es ist Aufgabe der Erfindung, eine Möglichkeit anzugeben, mittels welcher Feldgeräte unabhängig von ihrem Energiebedarf mittels einer Leitung miteinander verbunden werden können.

Die Lösung dieser Aufgabe ergibt sich durch die Merkmale des Anspruchs 1. Vorteilhafte Weiterbildungen der Erfindung sind Gegenstand der Unteransprüche.

Gemäß der Erfindung ist ein Buskoppler dadurch gekennzeichnet, dass eine erste Schnittstelle vorhanden ist, zur Anschaltung an ein aus ersten Feldgeräten gebildetes Kommunikationssystem, sowie eine zweite Schnittstelle vorhanden ist, zur Anschaltung an ein Energieversorgungsnetz, an welches zweite Feldgeräte angeschaltet sind, und die beiden Schnittstellen mittels eines Umsetzers miteinander verbunden sind.

Dadurch, dass der Buskoppler mittels der ersten Schnittstelle einerseits mit dem aus den ersten Feldgeräten gebildeten Kommunikationssystem verbunden werden kann und andererseits mit dem aus den zweiten Feldgeräten gebildeten System, bei welchem die Steuersignale mittels der Energieversorgungsleitungen übertragen werden, verbunden werden kann, stellt er ein Bindeglied zwischen zwei unterschiedlichen Kommunikationssystemen dar.

Der Buskoppler kann zum einen mittels der ersten Schnittstelle mit den ersten Feldgeräten kommunizieren und zum anderen mittels der zweiten Schnittstelle mit den zweiten Feldgeräten kommunizieren. Durch den Umsetzer sind die beiden Schnittstellen miteinander verbunden, so dass die vom Buskoppler über die erste Schnittstelle empfangenen Daten in entsprechend umgewandelter Form über die zweite Schnittstelle weitergegeben werden können und umgekehrt. Somit ist es möglich, das aus den ersten Feldgeräten gebildete Kommunikationssystem mit dem aus den zweiten Feldgeräten gebildeten Kommunikationssystem zu verbinden, wodurch erreicht wird, dass die beiden Systeme ein gemeinsames System bilden.

Bei Verwendung des Buskopplers ist es somit möglich, Feldgeräte, welche eine hohe Anschlussleistung haben, an einen herkömmlichen Feldbus, bei dem die Feldgeräte mittels einer lediglich für die Übertragung von Steuerdaten ausgelegten Busleitung miteinander verbunden sind, anzuschließen.

In vorteilhafter Weise weist der Umsetzer einen Modulator und einen Demodulator auf. Hierdurch kann die Umsetzung der an den jeweiligen Schnittstellen erhaltenen Signale auf einfache und bekannte Weise erfolgen.

Als besonders vorteilhaft hat sich eine Ausführungsform der Erfindung herausgestellt, bei der der Buskoppler eine Steuerung aufweist, mittels welcher Zustandsdaten der zweiten Feldgeräte zyklisch abgefragt und in einen ebenfalls im Buskoppler vorhandenen Speicher abgelegt werden. Hierdurch wird im Prinzip in dem Speicher eine Abbildung des aus den zweiten Feldgeräten gebildeten Netzwerks gebildet.

Es ist in vorteilhafter Weise somit möglich, bevor Steuerdaten über die zweite Schnittstelle zu den zweiten Feldgeräten gesandt werden, zunächst aufgrund der im Speicher vorhandenen Daten festzustellen, ob eine Übertragung der Daten erforderlich ist. Wird aufgrund der im Speicher vorhandenen Daten festgestellt, dass eine Übertragung entsprechender Steuerdaten an betreffende zweite Feldgeräte nicht erforderlich ist, werden die betreffenden Daten nicht zu den Feldgeräten gesandt. Hierdurch wird die zweite Schnittstelle entlastet, was sich sehr vorteilhaft auf den Datendurchsatz und damit auf die Übertragungszeit auswirkt.

Die Prüfung, ob eine Übertragung von Daten an die zweiten Feldgeräte erforderlich ist, kann in vorteilhafter Weise dadurch geschehen, dass in den Speicher auch solche Daten gespeichert werden, die den Sollzustand der Daten der zweiten Feldgeräte darstellen. Hierdurch kann durch einen direkten Vergleich der den Sollzustand darstellenden Daten mit den aus den zweiten Feldgeräten zyklisch ausgelesenen Daten festgestellt werden, welche Daten an zweite Feldgeräte übertragen werden müssen. Entsprechen die aus zweiten Feldgeräten ausgelesenen Daten den entsprechenden Sollzustandsdaten, brauchen diese Daten nicht an die betreffenden zweiten Feldgeräte übermittelt zu werden. Nur wenn eine Abweichung zwischen den aus den zweiten Feldgeräten zyklisch ausgelesenen Daten und den betreffenden Sollzustandsdaten auftritt, werden die betreffenden Sollzustandsdaten für die betreffenden Feldgeräte über die zweite Schnittstelle an die Feldgeräte übertragen.

Sehr vorteilhaft ist ein Kommunikationssystem, insbesondere Feldbus, mit wenigstens zwei Feldgeräten, welches dadurch gekennzeichnet ist, dass die Feldgeräte über einen vorstehend beschriebenen Buskoppler miteinander verbunden sind.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung. Es zeigen:
- Fig. 1: eine erste Ausführungsform eines erfindungsgemäßen Buskopplers,
- Fig. 2: eine zweite Ausführungsform eines erfindungsgemäßen Buskopplers und
- Fig. 3: ein Kommunikationssystem, bei welchem zwei unterschiedliche Systeme mittels eines erfindungsgemäßen Buskopplers miteinander verbunden sind.

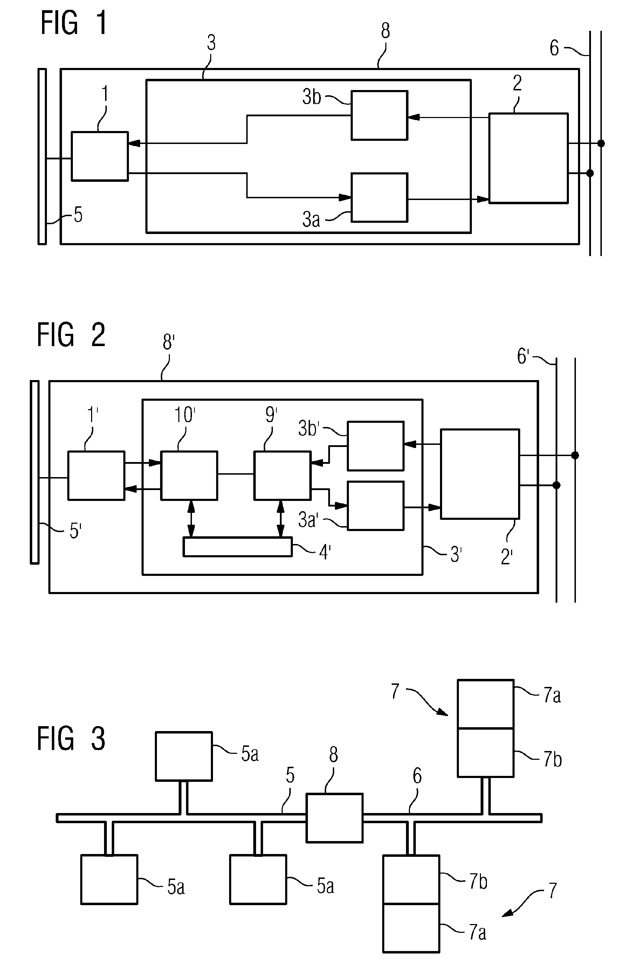

Wie Fig. 1 entnommen werden kann, weist ein Buskoppler 8 eine erste Schnittstelle 1 auf, mittels welcher er an einen Feldbus 5 anschaltbar ist, an welchen erste Feldgeräte 5a (vergleiche Fig. 3) angeschaltet sind. Des Weiteren weist der Buskoppler 8 eine zweite Schnittstelle 2 auf, mittels welcher er an die Leitungen eines Versorgungsnetzes 6 anschaltbar ist, welche zur Übermittlung von Steuerdaten an zweite Feldgeräte 7 dienen (vergleiche Fig. 3). Die erste Schnittstelle 1 ist mit der zweiten Schnittstelle 2 über einen Umsetzer 3 verbunden. Der Umsetzer 3 weist einen Modulator 3a auf, mittels welchem über die erste Schnittstelle 1 erhaltene Steuerdaten so aufbereitet werden, dass sie über die Leitungen des Versorgungsnetzes 6 übertragen werden können. Der Umsetzer 3 weist des Weiteren einen Demodulator 3b auf, mittels dem von der zweiten Schnittstelle 2 empfangene Signale so aufbereitet werden, dass sie über die erste Schnittstelle 1 auf den Feldbus 5 gegeben werden können.

Somit können auf dem Feldbus 5 vorhandene Steuerdaten über die erste Schnittstelle 1 an den Modulator 3a gelangen, wo sie derart aufbereitet werden, dass sie über die zweite Schnittstelle 2 als Steuerdaten auf die Leitung des Energieversorgungsnetzes 6 gegeben werden können. Des Weiteren können auf den Leitungen des Energieversorgungsnetzes 6 vorhandene Steuerdaten über die zweite Schnittstelle 2 an den Demodulator 3b gelangen, indem sie so aufbereitet werden, dass sie über die erste Schnittstelle 1 als Steuerdaten auf den Feldbus 5 gegeben werden können.

Die in Fig. 2 dargestellte Ausführungsform des Buskopplers entspricht im Wesentlichen der in Fig. 1 dargestellten Ausführungsform des Buskopplers. Gleiche Elemente sind daher mit denselben Bezugszeichen versehen. Zur Unterscheidung weisen sie jedoch einen Strich auf.

Im Unterschied zu der in Fig. 1 dargestellten ersten Ausführungsform des Buskopplers 8 weist der Umsetzer 3' der in Fig. 2 dargestellten zweiten Ausführungsform des Buskopplers 8' einen Speicher 4' auf, in den Zustandsdaten der zweiten Feldgeräte 7 speicherbar sind. Des Weiteren sind in dem Speicher 4' entsprechend den Zustandsdaten der zweiten Feldgeräte 7 Sollwerte gespeichert, die beispielsweise von einer am Feldbus 5' angeschlossenen, in der Figur nicht dargestellten Zentralsteuerung generiert wurden. Entsprechen die im Speicher 4' gespeicherten Zustandsdaten der zweiten Feldgeräte 7 den entsprechenden Sollwerten, werden die Sollwerte nicht an die zweiten Feldgeräte 7 übertragen. Treten zwischen den Sollwerten und den Zustandsdaten der zweiten Feldgeräte 7 Abweichungen auf, werden die betreffenden Sollwerte mittels einer Speichersteuerung 9' zur Übertragung an die betreffenden zweiten Feldgeräte 7 auf den Modulator 3a' gegeben.

Eine weitere Steuerung 10' dient dazu, dass der Buskoppler 8' die Spezifikationen wie beispielsweise Telegrammlängen oder zeitliche Abläufe des verwendeten Feldbussystems 5' einhält.

Wie Fig. 3 entnommen werden kann, sind an einem Feldbus 5 mehrere erste Feldgeräte 5a angeschaltet. Des Weiteren sind an den Leitungen eines Energieversorgungsnetzes 6 zweite Feldgeräte 7 angeschlossen. Die zweiten Feldgeräte 7 weisen neben den eigentlichen Feldgeräten 7a eine so genannte Powerline-Anschaltung 7b auf, mittels der die Steuerdaten der Feldgeräte 7a so aufbereitet werden, dass sie über die Leitungen des Energieversorgungsnetzes 6 übertragen werden können.

Der Feldbus 5 sowie die Leitung des Energieversorgungsnetzes 6 sind mittels eines Buskopplers 8, der entsprechend der in den Fig. 1 und 2 dargestellten Ausführungsformen ausgebildet sein kann, miteinander verbunden.

## Patentansprüche

1. Buskoppler, **dadurch gekennzeichnet, dass** eine erste Schnittstelle (1) vorhanden ist, zur Anschaltung an ein aus ersten Feldgeräten (5a) gebildetes Kommunikationssystem (5), sowie eine zweite Schnittstelle (2) vorhanden ist, zur Anschaltung an ein Energieversorgungsnetz (6), an welches zweite Feldgeräte (7) angeschaltet sind, und die beiden Schnittstellen (1, 2) mittels eines Umsetzers (3) miteinander verbunden sind.

2. Buskoppler nach Anspruch 1, **dadurch gekennzeichnet, dass** der Umsetzer (3) einen Modulator (3a) und einen Demodulator (3b) aufweist.

3. Buskoppler nach Anspruch 1 oder 2, **dadurch gekennzeichnet, dass** ein Speicher (4) sowie eine Steuerung (9) vorhanden ist, mittels welcher die Zustandsdaten der zweiten Feldgeräte (7) zyklisch abgefragt und in den Speicher (4) gespeichert werden.

4. Kommunikationssystem, insbesondere Feldbus, mit wenigstens zwei Feldgeräten (5a, 7), **dadurch gekennzeichnet, dass** die Feldgeräte (5a, 7) über einen Buskoppler (8) nach einem der vorhergehenden Ansprüche miteinander verbunden sind.
